# EUROPEAN PATENT APPLICATION

(11) **EP 2 720 097 A2**
(43) Date of publication of application: **16.04.2014**
(21) Application number: 13186196.5
(22) Date of filing: 26.09.2013
(51) Int. Cl.: G05B 19/4097

(54) **Wire-electrical discharge machine including NC program creating function**

(30) Priority: 12.10.2012 JP 2012226782
(71) Applicant: FANUC CORPORATION, Oshino-mura Minamitsuru-gun Yamanashi 401-0597 (JP)
(72) Inventor: Abe, Hiroyuki, Minamitsuru-gun, Yamanashi 401-0597 (JP)
(74) Representative: Ward, James Norman

(57) **Abstract**

CAD graphic data includes information corresponding to a machining shape, and at least one attribute information out of a line type, a line color, a line thickness, an a layer. Graphic data corresponding to the machining shape is extracted from the CAD graphic data based on setting by setting means, and an NC program is created from the extracted graphic data. Accordingly, the graphic data corresponding to the machining shape can be extracted even when an operator does not check the graphic data.

## Description

### BACKGROUND OF THE INVENTION

### Field of the Invention

The present invention relates to a wire-electrical discharge machine configured to easily create an NC program (a machining shape) by a CAM function incorporated in a numerical controller by inputting CAD data into the numerical controller.

### Description of the Related Art

In wire-electrical discharge machines, it is necessary to create an NC program that defines a machining shape, and register the NC program in a numerical controller so as to control the machining shape.

In conventional cases, the NC program is created and registered in the numerical controller in a procedure as described below.
(1) A desired machining shape is converted into a graphic by a CAD of a personal computer.
(2) Machining conditions or the like are set with respect to the shape converted into a graphic, and an NC program is generated by a CAM of the personal computer.
(3) The NC program is transferred to and registered in a numerical controller.

When the machining shape is converted into a graphic in the above (1), additional information such as a workpiece mounting section of the machine, an operating section of the machine, a workpiece fixing jig, a peripheral device, a dimension line, surface roughness, annotation, and a frame line of a drawing may be included in graphic data to be transferred to the CAD in addition to the machining shape for machining. The additional information is required for checking interference or considering the jig shape in some cases.

In the conventional technique, however, when the machining shape is converted into a graphic by the CAD, and the NC program is thereafter generated by the CAM function, the graphic data of the machining shape required for actually generating the NC program, and the graphic data of the additional information cannot be discriminated from each other. Thus, if the NC program is directly generated from the graphic data transferred from the CAD, the NC program may be generated by using the graphic data of the additional information as a machining shape. As a result, a machining shape different from the actual machining shape is obtained. It is thus necessary for an operator to discriminate the graphic data of the machining shape from the graphic data of the additional information before generating the NC program, delete the additional information, and thereafter transmit the graphic data to the CAM to generate the NC program.

Particularly, when the graphic data of the machining shape and the additional information are intricately related to each other, the graphic data of the machining shape and the additional information may be difficult to discriminate from each other. When the graphic data has a large size, it is also not easy to check the entire data.

Even when the NC program is created as described above, the machining shape or a machining position may be changed afterward. In this case, an operator needs to reconsider discrimination based on the CAD drawing including the additional information to separate the graphic data of the machining shape and the graphic data of the additional information, and delete the additional information so as to perform the CAM operation.

When there are a plurality of machining shapes, and each shape requires different levels of surface roughness, it is necessary to set machining conditions while individually selecting machining shape data in the CAM operation.

The CAM functional part in the above (2) is mostly performed by software on a personal computer separately from the numerical controller. In this case, if the numerical controller and the personal computer use different types of CPUs or algorithms, arithmetic processing thereof may differ.

Thus, the arithmetic processing of a machining path performed by the software on the personal computer may not be properly operated in the wire-electrical discharge machine. To check whether the arithmetic processing is properly operated or not, it is necessary to visually check a deviation after actually carrying out drawing by using a drawing function of the numerical controller. However, the visually checking operation is complicated, and it is difficult to check the details in a case in which there are a plurality of machining shapes or in a case of a fine machining shape.

A technique for discrimination between the machining shape and the additional information is disclosed in the prior art documents described below.

Japanese Patent Application Laid-Open No. 08-022316 discloses a technique for setting an unmachined shape and a machined shape on a database, and giving unmachined/machined attributes to shape data in a CAD/CAM device that generates NC data for machining a machining shape by a numerically-controlled machine tool by using CAD data of a design drawing. In the technique, the unmachined or machined attribute is set in setting means and registered in a database. Thus, it is necessary to create the database and register the attribute in the database. Depending on the setting means, it also becomes necessary to set the attribute.

Japanese Patent Application Laid-Open No. 61-160108 discloses a technique for discriminating the type of graphic data from a group of graphic data and creating a program based on the identification result in machining control using a numerically-controlled machine tool. In the technique, although the type of graphic data is discriminated from the group of graphic data, the specific discriminating method is not clearly specified. Thus, a large load may be generated depending on the employed determining method.

Japanese Patent Application Laid-Open No. 02-072413 discloses a technique for creating a machining program by an operator inputting required machining information such as roughness depending on the type of machining in a device for creating a program for a numerical controller. In the technique, an operator needs to input information regarding shape data according to an object to be machined.

Japanese Patent Application Laid-Open No. 05-204434 discloses a technique for specifying the surface finish accuracy of an object to be machined by giving a finish mark indicating the machining accuracy of the surface of the object to be machined at a predetermined position on a drawing created by a CAD system. In the technique in which the finish mark or a surface mark indicating the machining accuracy of the surface of the object to be machined is described at a predetermined position on the drawing created by the CAD system, the machining accuracy can be specified only for the entire drawing. Particularly, in a drawing of, for example, contact surfaces of a male mold and a female mold, in which a plurality of lines are overlapped, even when the mark indicating the machining accuracy is described in the drawing, it is difficult to distinguish the machining accuracy of the line which the mark represents.

Japanese Patent Application Laid-Open No. 07-093013 discloses a technique for associating graphic data of a graphic element in a product drawing with annotation/mark data in an association section, and automatically defining machining conditions or a machining shape based on the graphic data and the annotation/mark data associated with each other in a CAD/CAM unit. In the technique, it is necessary to associate the graphic data of the graphic element with the annotation/mark data in the association section. Therefore, it is necessary to associate the data every time the graphic data of the graphic element and the machining conditions are changed. Thus, the operation is complicated.

### SUMMARY OF THE INVENTION

It is an object of the present invention to provide a wire-electrical discharge machine which can easily create an NC program by inputting into a numerical controller CAD data in which graphic data of a machining shape and graphic data of additional information are mixed.

A wire-electrical discharge machine according to the present invention has an NC program creating function to create an NC program from CAD graphic data. The CAD graphic data includes a line constituting a graphic and attribute information of the line, and the attribute information of the line includes at least one of a type, a color, and a thickness of the line, and a layer. The wire-electrical discharge machine includes: setting means that sets an attribute of a line extracted as a machining shape from the CAD graphic data; extracting means that extracts graphic data corresponding to the machining shape extracted from the CAD graphic data, based on the setting by the setting means; and NC program creating means that creates an NC program from the graphic data corresponding to the machining shape, extracted by the extracting means.

In the wire-electrical discharge machine according to the present invention, the line constituting a graphic in the CAD graphic data includes attribute information such as line type, line color, line thickness, and layer, and the attribute corresponding to the machining shape is set by the setting means. Accordingly, the graphic data corresponding to the machining shape can be extracted according to the set attribute. It is thus not necessary for an operator to discriminate the graphic data of the machining shape from graphic data of additional information. The NC program can be thereby easily created.

The CAD graphic data may be created by a CAD unit, and the wire-electrical discharge machine may further include CAD graphic data reading means that reads the CAD graphic data created by the CAD unit.

In the wire-electrical discharge machine, the CAD graphic data reading means can also read the CAD graphic data created by an external CAD unit. The NC program can be thereby easily created.

The wire-electrical discharge machine may further include CAD graphic data creating means that creates the CAD graphic data.

The wire-electrical discharge machine includes the CAD graphic data creating means within the wire-electrical discharge machine itself. Thus, even when the external CAD unit is not provided, the wire-electrical discharge machine itself can create the CAD graphic data, and thereafter easily create the NC program.

The wire-electrical discharge machine may further include: surface roughness information storing means that stores surface roughness information corresponding to the attribute information; and machining condition setting means that sets a machining condition corresponding to the surface roughness, and the NC program creating means may create the NC program from the graphic data corresponding to the machining shape extracted by the extracting means, the attribute information of the extracted graphic data corresponding to the machining shape, the surface roughness information, and the machining condition.

The wire-electrical discharge machine includes the surface roughness information storing means that stores the correspondence relationship between the attribute information and the surface roughness information, and the machining condition setting means that sets the machining condition corresponding to the surface roughness. Accordingly, by preliminarily setting the attribute information so as to obtain desired surface roughness or machining condition, the surface roughness and the machining condition can be easily set when the NC program is created.

The wire-electrical discharge machine may further include: machining path calculating means that calculates a machining path when carrying out drawing from the created NC program; comparing means that compares coordinates of a start point and an end point of the calculated machining path, with coordinates of a start point and an end point of a line corresponding to the machining shape of the CAD graphic data; determining means that determines whether or not the coordinates compared by the comparing means correspond to each other; and informing means that informs a determination result by the determining means.

The wire-electrical discharge machine can check whether or not the NC program is properly created by comparing the graphic data in carrying out drawing with the CAD graphic data even when the drawing is not actually executed and checked by an operator.

The present invention can provide the wire-electrical discharge machine including the NC program creating function to easily create the NC program within the numerical controller by inputting the CAD data into the numerical controller.

### BRIEF DESCRIPTION OF THE DRAWINGS

These and other objects and features of the present invention will become apparent from the following detailed description with reference to the accompanying drawings in which:
FIG. 1 is a block diagram schematically illustrating a numerical controller provided in a wire-electrical discharge machine and a personal computer according to the present invention;
FIG. 2 shows an example of CAD graphic data;
FIG. 3 is a view illustrating a relationship between the type of lines and the class of graphic data in the CAD graphic data;
FIG. 4 is a view illustrating a relationship between the color of lines and the class of graphic data in the CAD graphic data;
FIG. 5 is a view illustrating a relationship between a layer and the class of graphic data in the CAD graphic data;
FIG. 6 is a view illustrating a relationship among the type of data, the type of lines, the thickness of lines, the color of lines, and the layer of the CAD graphic data;
FIG. 7 is a view illustrating a processing flow for extracting graphic data of a machining shape from the CAD graphic data;
FIG. 8 shows an example of the graphic data of the machining shape extracted from the CAD graphic data;
FIG. 9 is a view illustrating a processing flow for setting machining conditions with respect to the graphic data of the machining shape;
FIG. 10 is a view illustrating a relationship between the thickness of lines and surface roughness of the CAD graphic data;
FIG. 11 is a view illustrating a relationship between the color of lines and surface roughness of the CAD graphic data;
FIG. 12 is a view illustrating a relationship between the surface roughness and the machining conditions;
FIG. 13 is a view illustrating a relationship between the data types and the machining conditions;
FIG. 14 is a view illustrating a relationship among the coordinates of a square shape from the CAD graphic data, the coordinates obtained by carrying out drawing without an offset, and the coordinates obtained by carrying out drawing with an offset;
FIG. 15 is a view illustrating a flow for comparing graphic data obtained by carrying out drawing and the graphic data of the machining shape;
FIG. 16 is a view illustrating coordinate data of the machining shape of the CAD data;
FIG. 17 is a view illustrating coordinate data of the machining shape obtained by carrying out drawing without an offset; and
FIG. 18 is a view illustrating coordinate data of the machining shape obtained by carrying out drawing with an offset.

### DETAILED DESCRIPTION OF THE PREFERRED EMBODIMENT

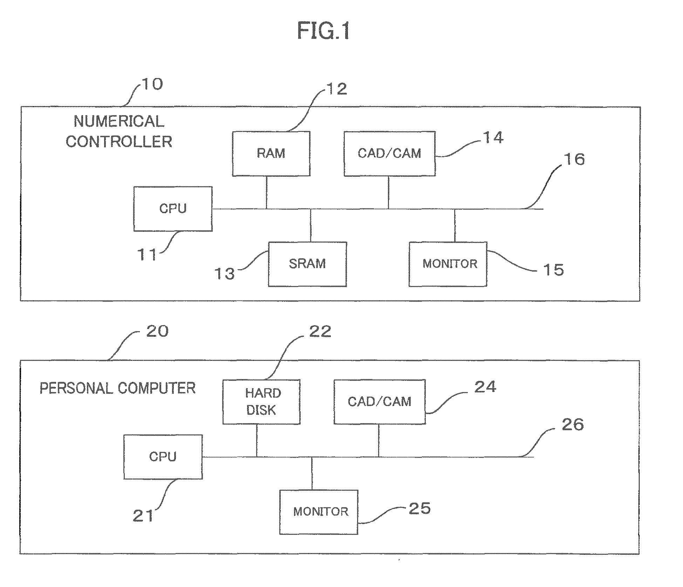

A numerical controller provided in a wire-electrical discharge machine and a personal computer according to the present invention will be described based on FIG. 1.

A numerical controller 10 is provided in the wire-electrical discharge machine. The numerical controller 10 includes a CPU 11, a RAM 12, an SRAM 13, a CAD/CAM unit 14, and a monitor 15, which are connected to each other via a bus 16. The CPU 11 makes extraction settings and settings of machining conditions, executes a drawing operation or the like described below.

A personal computer 20 that creates CAD graphic data, and transfers the created CAD graphic data to the numerical controller of the wire-electrical discharge machine is connected to the numerical controller 10 of the wire-electrical discharge machine if necessary. The personal computer 20 includes a CPU 21, a hard disk 22, a CAD/CAM unit 24, and a monitor 25, which are connected to each other via a bus 26. The CPU 21 makes extraction settings, settings of machining conditions or the like described below.

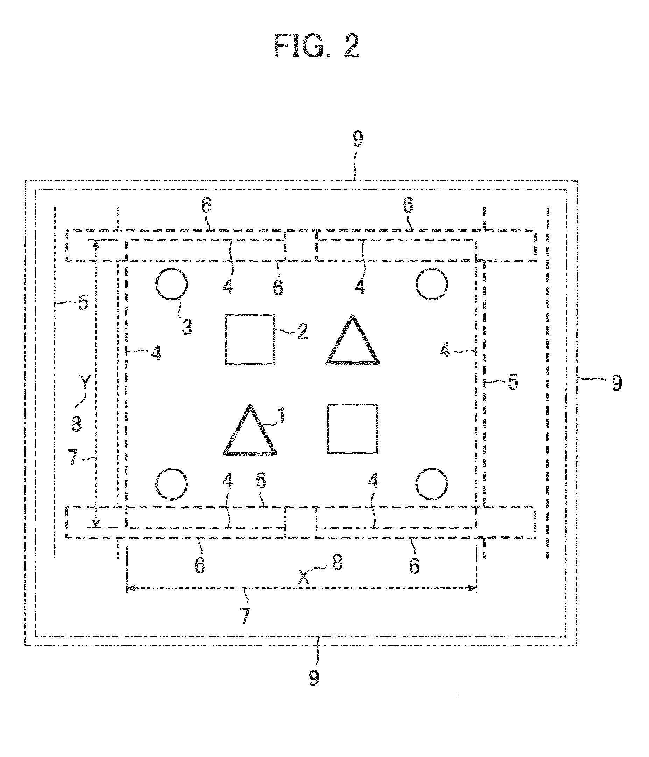

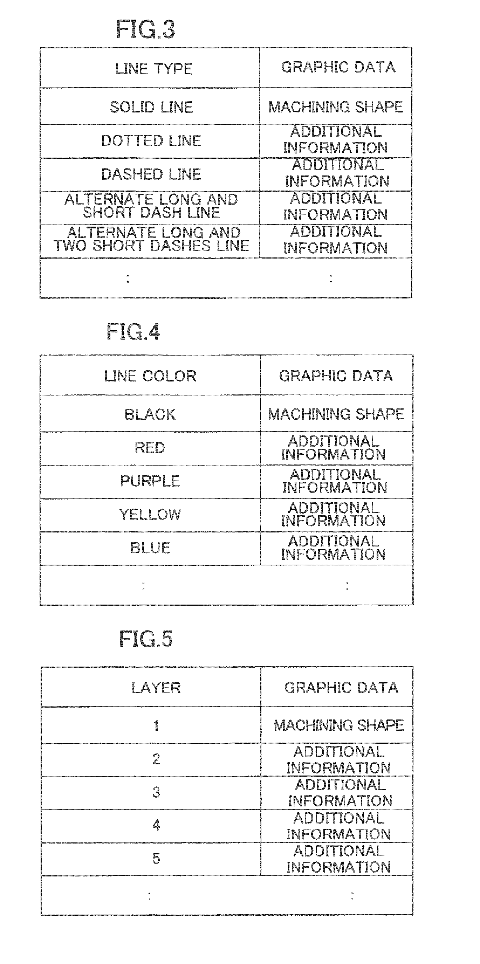

FIG. 2 shows an example of CAD graphic data. FIG. 3 is a table illustrating a relationship between the type of lines and the class of graphic data in the CAD graphic data. FIG. 4 is a table illustrating a relationship between the color of lines and the class of graphic data. FIG. 5 is a table illustrating a relationship between a layer and the class of graphic data. The layer means a layer for use to display a plurality of images in an overlapped manner.

In the present embodiment, it is set that a line, the type of which is a solid line, represents a machining shape, and the other types of lines represent additional information as shown in FIG. 3. It is also set that a line, the color of which is black, represents a machining shape, and lines in the other colors represent additional information as shown in FIG. 4. It is further set that a layer 1 represents a machining shape, and the other layers represent additional information as shown in FIG. 5.

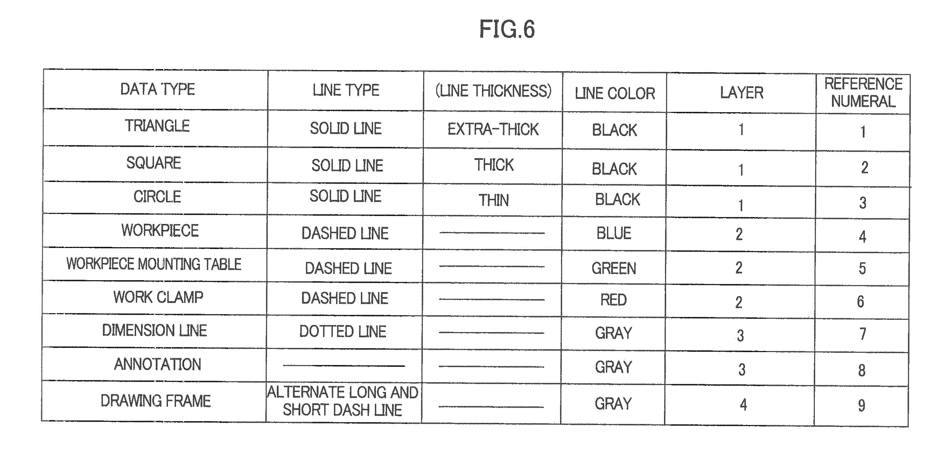

FIG. 6 is a table illustrating a relationship among the type of data, the type of lines, the thickness of lines, the color of lines, and the layer of the CAD data shown in FIG. 2 based on the relationships in FIGS. 3, 4, and 5.

As shown in FIGS. 2 and 6, reference numeral 1 denotes triangular machining shape data, whose line type is a solid line, line thickness is extra-thick, line color is black, and layer is 1. Reference numeral 2 denotes square machining shape data, whose line type is a solid line, line thickness is thick, line color is black, and layer is 1. Reference numeral 3 denotes circular machining shape data, whose line type is a solid line, line thickness is thin, line color is black, and layer is 1. Reference numeral 4 denotes data representing a workpiece as an object to be machine, whose line type is a dashed line, line thickness is extra-thick, line color is blue (which cannot be recognized in FIG. 2), and layer is 2. Reference numeral 5 denotes data representing a mounting table where a workpiece is mounted, whose line type is a dashed line, line thickness is thick, line color is green (which cannot be recognized in FIG. 2), and layer is 2. Reference numeral 6 denotes data representing a work clamp for fixing a workpiece, whose line type is a dashed line, line thickness is thin, line color is red (which cannot be recognized in FIG. 2), and layer is 2. Reference numeral 7 denotes data representing a dimension line, whose line type is a dotted line, line color is gray (which cannot be recognized in FIG. 2), and layer is 3. Reference numeral 8 denotes annotation, whose line color is gray (which cannot be recognized in FIG. 2), and layer is 3. Reference numeral 9 denotes data representing a drawing frame, whose line type is an alternate long and short dash line, line color is gray (which cannot be recognized in FIG. 2), and layer is 4.

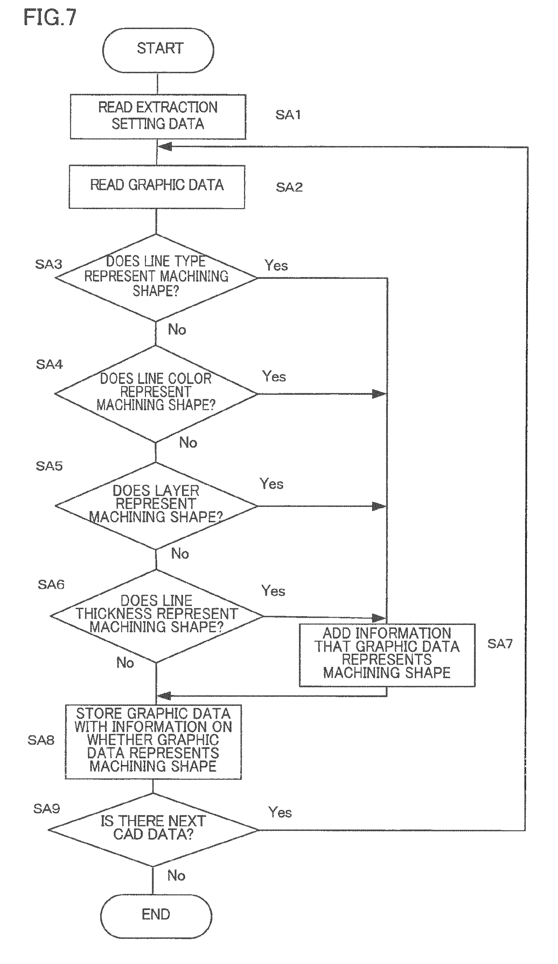

FIG. 7 is a view illustrating a processing flow for extracting graphic data of a machining shape from the CAD graphic data. Respective steps will be described below.

### [Step SA1]

First, setting data regarding attribute information of data to be extracted as machining shape data is read.

### [Step SA2]

Subsequently, CAD graphic data in which the machining shape data and additional information data are mixed is read.

### [Step SA3]

It is determined whether the line type represents a machining shape or not. In the processing example (FIG. 3), it is determined whether the line type is a solid line or not. When the line type is a solid line (Yes), the processing proceeds to step SA7. When the line type is not a solid line (No), the processing proceeds to step SA4.

### [Step SA4]

It is determined whether the line color represents the machining shape or not. In the processing example (FIG. 4), it is determined whether the line color is black or not. When the line color is black (Yes), the processing proceeds to step SA7. When the line color is not black (No), the processing proceeds to step SA5.

### [Step SA5]

It is determined whether the layer represents the machining shape or not. In the processing example (FIG. 5), it is determined whether the layer is 1 or not. When the layer is 1 (Yes), the processing proceeds to step SA7. When the layer is not 1 (No), the processing proceeds to step SA6.

### [Step SA6]

It is determined whether the line thickness represents the machining shape or not. In the processing example (FIG. 6), it is determined whether or not the line thickness is any one of extra-thick, thick, and thin. When the line thickness is any one of extra-thick, thick, and thin (Yes), the processing proceeds to step SA7.

When the line thickness is not extra-thick, thick, nor thin (No), the processing proceeds to step SA8.

### [Step SA7]

Information that the graphic data represents the machining shape is added.

### [Step SA8]

The graphic data is stored with the information on whether the graphic data represents the machining shape or not.

### [Step SA9]

It is determined whether there is next CAD graphic data or not. When there is next CAD graphic data (Yes), the processing returns to step SA2, in which the next CAD graphic data is read. Meanwhile, when there is no next CAD graphic data (No), the processing (the processing for extracting the graphic data of the machining shape) is terminated.

With the processing described above, it is not necessary to delete graphic data of additional information from the CAD data in a CAM operation. In the processing example, graphic data of the machining shape is extracted when the graphic data satisfies all the requirement (discrimination elements) that the line type is a solid line, the line color is black, and the layer is 1. However, graphic data may be discriminated as the graphic data of the machining shape when any one of those discrimination elements is satisfied, as shown in the flowchart in FIG. 7.

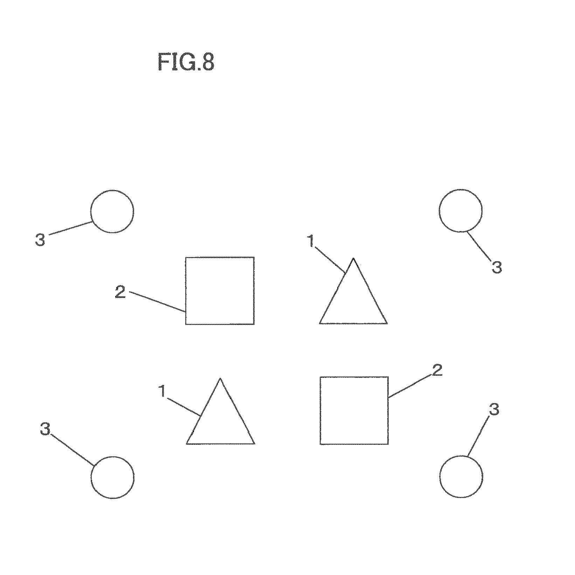

When only the machining shape data extracted as described above is displayed, only triangular, square, and circular machining shape data are extracted as shown in FIG. 8.

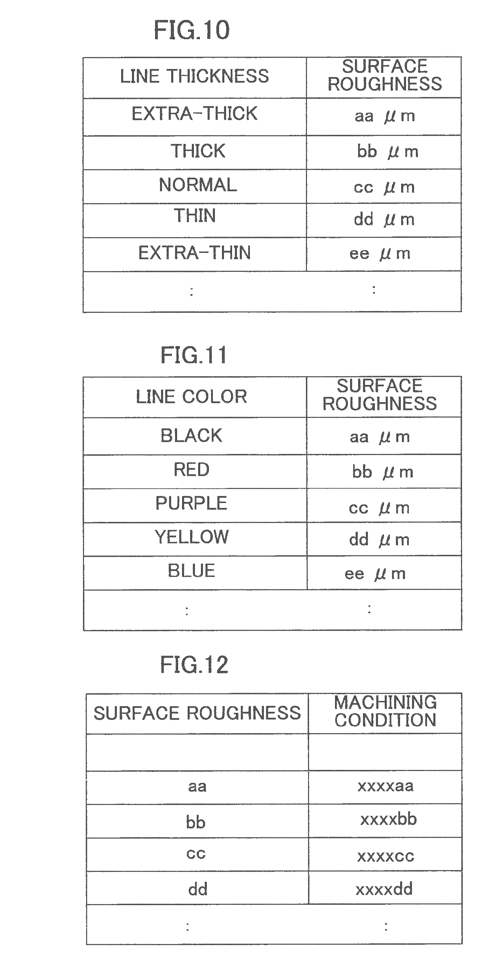

Next, to set machining conditions with respect to the machining shape, any one of the elements of the CAD graphic data is used. In the present embodiment, the line thickness of the CAD graphic data is used. A relationship between the line thickness and machined surface roughness is set in advance as shown in FIG. 10. In the processing example, when the line thickness is extra-thick, the surface roughness is set to aa µm. When the line thickness is thick, the surface roughness is set to bb µm. When the line thickness is normal, the surface roughness is set to cc µm. When the line thickness is thin, the surface roughness is set to dd µm. When the line thickness is extra-thin, the surface roughness is set to ee µm. When the line thickness cannot be set or cannot be clearly distinguished by the CAD, another discrimination element such as the line color may be employed as shown in FIG. 11.

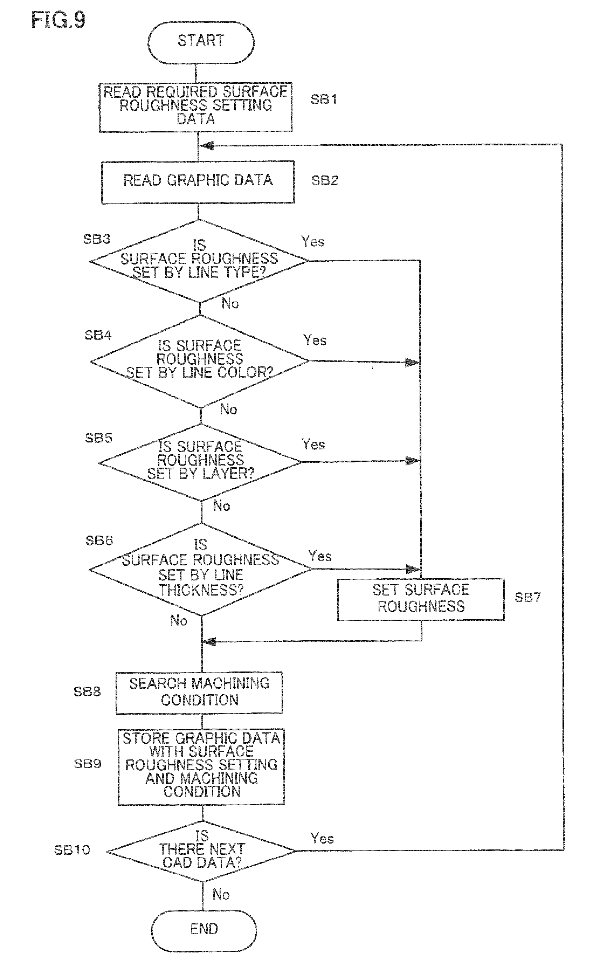

FIG. 9 is a view illustrating a processing flow for setting machining conditions with respect to the graphic data of the machining shape. Respective steps will be described below.

### [Step SB1]

First, setting data regarding attribute information and required surface roughness as shown in FIGS. 10 and 11 is read.

### [Step SB2]

Subsequently, graphic data is read.

### [Step SB3]

It is determined whether surface roughness is set by the line type or not. When the surface roughness is set (Yes), the processing proceeds to step SB7. When the surface roughness is not set (No), the processing proceeds to step SB4.

### [Step SB4]

It is determined whether the surface roughness is set by the line color or not. When the surface roughness is set (Yes), the processing proceeds to step SB7. When the surface roughness is not set (No), the processing proceeds to step SB5.

### [Step SB5]

It is determined whether the surface roughness is set by the layer or not. When the surface roughness is set (Yes), the processing proceeds to step SB7. When the surface roughness is not set (No), the processing proceeds to step SB6.

### [Step SB6]

It is determined whether the surface roughness is set by the line thickness or not. When the surface roughness of a machining surface is set by the line thickness (Yes) as shown in FIG. 10, the processing proceeds to step SB7. On the other hand, when the surface roughness of the machining surface is not set by the line thickness (No), the processing proceeds to step SB8.

### [Step SB7]

The surface roughness is set.

### [Step SB8]

Machining conditions are searched. More specifically, a relationship between the surface roughness and the machining conditions as shown in FIG. 12 is determined in advance, and machining conditions corresponding to the surface roughness set in step SB7 are determined.

### [Step SB9]

The graphic data is stored together with the surface roughness set in step SB7 and the machining conditions set in step SB8.

### [Step SB10]

It is determined whether there is next CAD data or not. When there is next CAD data (Yes), the processing returns to step SB2, in which the next graphic data is read. When there is no next CAD data (No), the processing (the processing for setting the machining conditions with respect to the graphic data of the machining shape) is terminated.

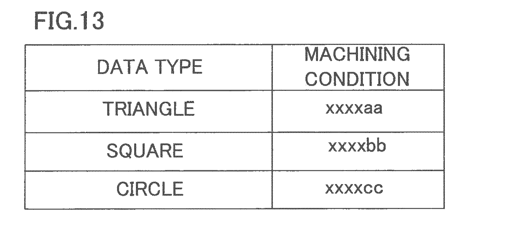

In the case of the present example, the line thickness of the triangular machining shape is set to extra-thick, as shown in FIG. 6. Thus, the required surface roughness is aa µm (see FIG. 10), and the machining conditions are xxxxaa (see FIG. 12). FIG. 13 shows a relationship between the data types and the machining conditions.

At this point, the machining conditions may be searched by either the personal computer or the numerical controller. However, when the numerical controller searches the machining conditions, better data is obtained since the latest data in an actual machine is obtained, which is advantageous. However, when the personal computer uses proper data, the personal computer may of course search the machining conditions.

Subsequently, it is necessary to check whether an NC program is properly created or not. If the CAD data is provided only in the personal computer, it is necessary to visually check whether or not the program is proper by carrying out drawing by means of the numerical controller as described in the conventional technique.

However, when the CAD data can be input in the numerical controller, the program can be more accurately and easily checked by comparing graphic data obtained by carrying out drawing by means of the numerical controller, with the CAD graphic data.

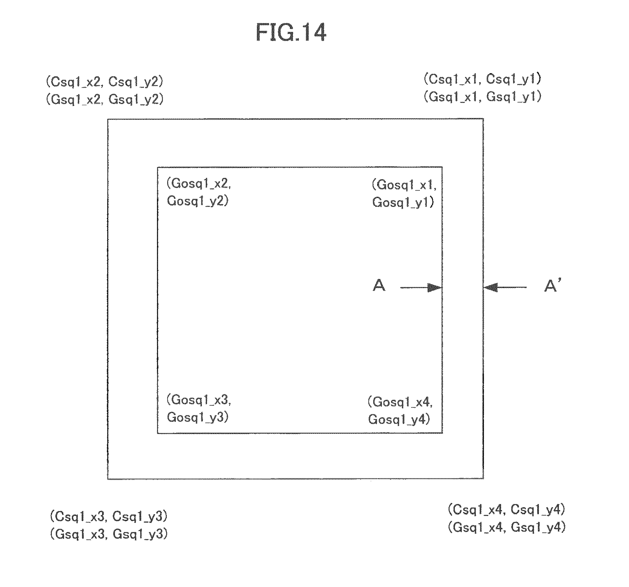

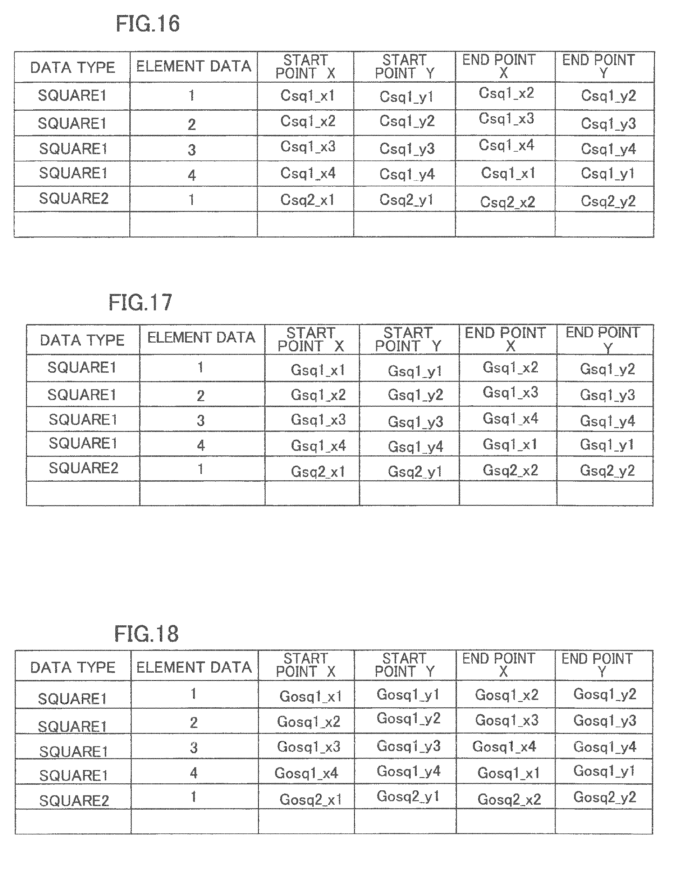

FIG. 14 is a view illustrating a relationship among the coordinates of a square shape as the machining shape from the CAD data, the coordinates of actual drawing data without an offset, and the coordinates of actual drawing data with an offset. FIG. 16 is a view illustrating the coordinates of a start point and an end point of the machining shape data of the CAD data in FIG. 14. FIG. 17 is a view similarly illustrating the coordinates of a start point and an end point of the actual drawing data without an offset. FIG. 18 is a view similarly illustrating the coordinates of a start point and an end point of the actual drawing data with an offset. As shown in FIG. 14 by a line A-A', a deviation corresponding to an offset amount in consideration of the size of a tool is generated in the actual drawing. Thus, an inward deviation is generated in a case of a die shape in which the inner side is removed, and an outward deviation is generated in a case of a punch shape in which the outer side is removed. The coordinates are thereby deviated. Since the die shape is employed in the example of FIG. 14, an inward offset is generated in an amount corresponding to a tool for machining the inner side.

If the coordinates of the drawing data are compared with those of the CAD data, taking an offset amount into consideration, calculation for comparing the coordinates of the drawing data with those of the CAD data becomes complicated. Thus, it is preferable, in checking an NC program, to compare those coordinates using data without an offset amount. In the example in FIG. 14, since the NC program is properly created, the coordinates from the CAD data and the coordinates of the actual drawing data without the offset correspond to each other. Thus, it is found that the NC program is properly created.

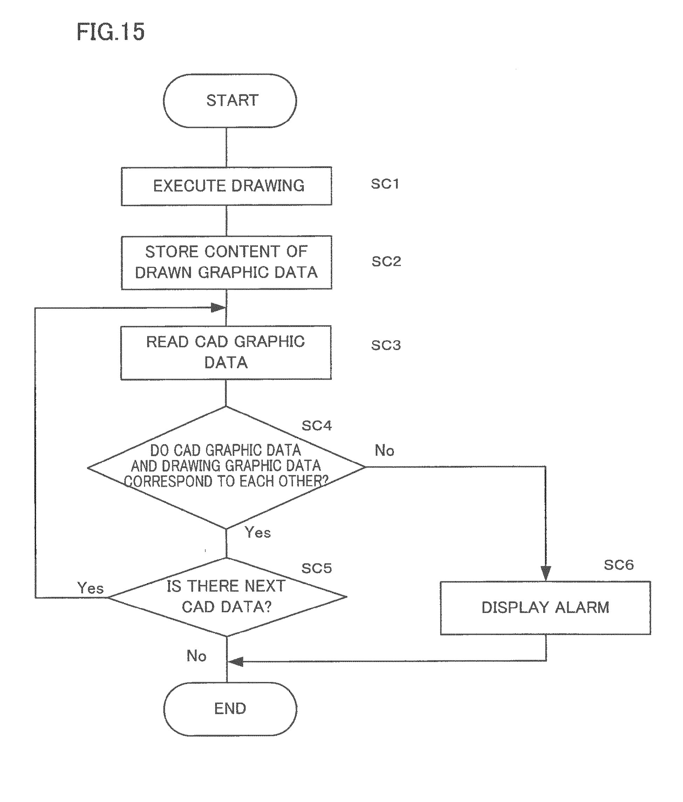

FIG. 15 is a view illustrating a processing flow for comparing the graphic data obtained by actually carrying out drawing and the CAD graphic data. Respective steps will be described below.

### [Step SC1]

First, drawing is executed.

### [Step SC2]

Subsequently, the content of the drawn graphic data is stored.

### [Step SC3]

CAD graphic data is read.

### [Step SC4]

It is determined whether or not the CAD graphic data and the graphic data of the drawing correspond to each other. When the data correspond to each other (Yes), the processing proceeds to step SC5. When the data do not correspond to each other (No), the processing proceeds to step SC6.

### [Step SC5]

It is determined whether there is next CAD graphic data or not. When there is next CAD graphic data (Yes), the processing returns to step SC3, in which the next CAD graphic data is read. When there is no next CAD graphic data (No), the processing is terminated.

### [Step SC6]

An alarm indicating that the CAD graphic data and the drawing graphic data do not correspond to each other is displayed. The processing (the processing for comparing the graphic data obtained by actually carrying out drawing and the CAD graphic data) is then terminated.

Although the shape whose line type is a solid line, line color is black, and layer is 1 is employed as the machining shape in the present embodiment, the present invention is not limited thereto. It goes without saying that the above elements may be set as appropriate.

Although the NC program is checked within the numerical controller in the present embodiment, the personal computer may be also configured to check the NC program. Moreover, although the alarm is displayed in checking the NC program when the CAD graphic data and the drawing graphic data do not correspond to each other, the alarm may not be necessarily informed by display. The alarm may be also informed by another method such as warning sound.

## Claims

1. A wire-electrical discharge machine having an NC program creating function to create an NC program from CAD graphic data, wherein
the CAD graphic data includes a line constituting a graphic and attribute information of the line, and the attribute information of the line includes at least one of a type, a color, and a thickness of the line, and a layer, and wherein
the wire-electrical discharge machine comprises:
setting means that sets an attribute of a line extracted as a machining shape from the CAD graphic data;
extracting means that extracts graphic data corresponding to the machining shape extracted from the CAD graphic data, based on the setting by the setting means; and
NC program creating means that creates an NC program from the graphic data corresponding to the machining shape, extracted by the extracting means.

2. The wire-electrical discharge machine having an NC program creating function according to claim 1, wherein
the CAD graphic data is created by a CAD unit, and
the wire-electrical discharge machine further comprises CAD graphic data reading means that reads the CAD graphic data created by the CAD unit.

3. The wire-electrical discharge machine having an NC program creating function according to claim 1, further comprising:
CAD graphic data creating means that creates the CAD graphic data.

4. The wire-electrical discharge machine having an NC program creating function according to claim 1, further comprising:
surface roughness information storing means that stores surface roughness information corresponding to the attribute information; and
machining condition setting means that sets a machining condition corresponding to the surface roughness,
wherein the NC program creating means creates the NC program from the graphic data corresponding to the machining shape extracted by the extracting means, the attribute information of the extracted graphic data corresponding to the machining shape, the surface roughness information, and the machining condition.

5. The wire-electrical discharge machine having an NC program creating function according to claim 1, further comprising:
machining path calculating means that calculates a machining path when carrying out drawing from the created NC program;
comparing means that compares coordinates of a start point and an end point of the calculated machining path, with coordinates of a start point and an end point of a line corresponding to the machining shape of the CAD graphic data;
determining means that determines whether or not the coordinates compared by the comparing means correspond to each other; and
informing means that informs a determination result by the determining means.
